# FASCICULE DE BREVET EUROPEEN

(11) **EP 3 114 444 B1**
(45) Date de publication et mention de la délivrance du brevet: **03.05.2023**
(21) Numéro de dépôt: 15714580.6
(22) Date de dépôt: 06.03.2015
(51) Int. Cl.: G01J 5/06, F25B 9/02, F25D 19/00

(54) **DISPOSITIF DE DETECTION REFROIDI**
GEKÜHLTE DETEKTIONSVORRICHTUNG
COOLED DETECTING DEVICE

(30) Priorité: 06.03.2014 FR 1400552
(43) Date de publication de la demande: 11.01.2017
(73) Titulaire: LYNRED, 91120 Palaiseau (FR)
(72) Inventeur: TERME, Jean-Christophe, F-38250 Lans en Vercors (FR); KESSLER, Antoine, F-38500 Voiron (FR)
(74) Mandataire: Talbot, Alexandre
(86) Numéro de dépôt international: PCT/FR2015/050552
(87) Numéro de publication internationale: WO 2015/132538

(56) Documents cités:
- EP-A2- 0 945 690
- WO-A1-96/40834
- GB-A- 1 238 470
- US-A- 4 488 414
- US-A- 4 682 032

## Description

### Domaine technique de l'invention

L'invention est relative à un dispositif de détection refroidi.

### État de la technique

Dans le domaine des dispositifs de détection, il y a communément un photodétecteur associé à un circuit de lecture. Le photodétecteur délivre un signal représentatif de la scène observée et ce signal est traité par le circuit de lecture.

La polarisation du photodétecteur est obtenue au moyen d'un potentiel de substrat imposé sur une première borne du photodétecteur et au moyen d'un potentiel de référence imposé sur la seconde borne du photodétecteur. Le potentiel de référence est imposé, par exemple, par un dispositif de lecture de type amplificateur transimpédance capacitif.

Afin d'obtenir des performances de détection importantes, il est intéressant d'utiliser des substrats particuliers, par exemple à base de Mercure, Cadnium, Tellure et de faire fonctionner ces équipements à basse température. L'utilisation d'une basse température permet de limiter les perturbations électriques parasites lors de la transformation du signal optique en un signal électrique.

De manière classique, le circuit de détection est couplé thermiquement à un dispositif de refroidissement qui réalise l'évacuation de la chaleur. Cependant cette architecture est difficile à mettre en oeuvre et les performances finales du dispositif sont inférieures à ce qui est attendu du point de vue théorique. Le rendement mesuré des refroidisseurs actuellement utilisés est de l'ordre de 8 à 10% ce qui oblige à utiliser des quantités importantes d'énergies pour refroidir convenablement le dispositif de détection.

Des exemples de l'état de la technique sont fournis par les documents US4682032, GB1238470, US4488414, EP0945690 et WO9640834.

### Objet de l'invention

On constate qu'il existe un besoin de fournir un dispositif de détection refroidi qui est moins consommateur d'énergie.

On tend à atteindre ce but au moyen d'un dispositif qui comporte les caractéristiques de la revendication 1.

### Description sommaire des dessins

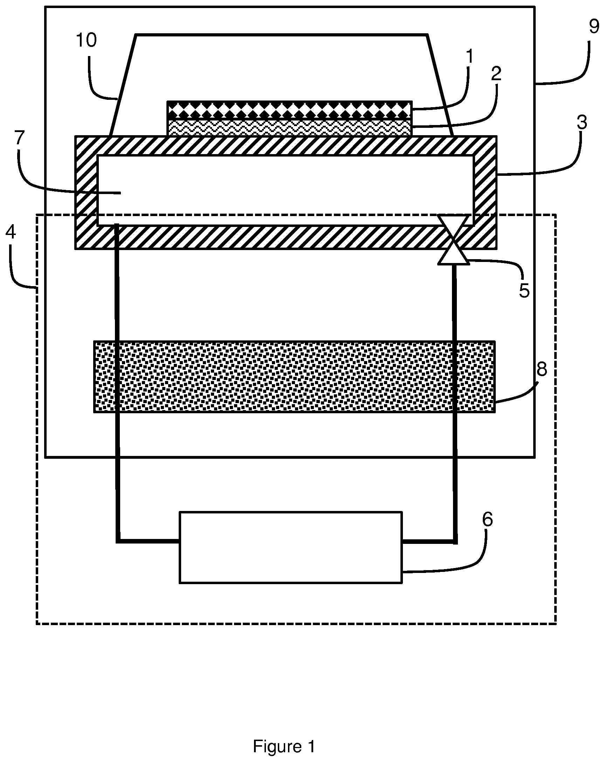

D'autres avantages et caractéristiques ressortiront plus clairement de la description qui va suivre de modes particuliers de réalisation de l'invention donnés à titre d'exemples non limitatifs et représentés au dessin annexé, dans lequel la figure 1 illustre en coupe, de manière schématique, un dispositif de détection de rayonnement électromagnétique.

### Description de modes de réalisation préférentiels de l'invention

Le dispositif de détection comporte un circuit de détection 1 et un circuit de lecture 2. Les circuits de lecture 2 et de détection 1 sont reliés électriquement de manière que le circuit de lecture 2 traite l'information émise par le circuit de détection 1.

Dans un mode de réalisation particulier qui peut être combiné aux précédents, le circuit de détection 1 est formé sur un premier substrat semiconducteur et le circuit de lecture 2 est formé sur un second substrat semiconducteur de manière à obtenir de bonnes caractéristiques de détection et de bonnes performances du circuit de lecture 2. Les deux substrats sont formés dans des matériaux différents et sont avantageusement hybridés afin de former un composant hybridé. Cette configuration particulière permet d'obtenir un système compact. L'hybridation des deux substrats est avantageusement réalisée par une ou plusieurs billes en matériau électriquement conducteur qui sont disposées entre les deux substrats. Les deux substrats sont fixés mécaniquement l'un à l'autre par les billes fondues.

Le circuit de détection 1 comporte au moins un photodétecteur transformant un signal optique en un signal électrique. Le circuit de détection est configuré pour être sensible à un rayonnement électromagnétique dans une gamme de longueur d'ondes prédéfinie au moyen d'au moins un photodétecteur. De manière préférentielle, le circuit de détection comporte une pluralité de photodétecteurs.

A titre d'exemple, le photodétecteur est une photodiode, un dispositif à puits quantique ou à multipuits quantique. Dans un mode de réalisation préférentiel, le photodétecteur réalise la détection dans le domaine de l'infrarouge. A titre d'exemple, le substrat du circuit de détection est un substrat dit II-VI, par exemple à base de HgCdTe et le substrat du circuit de lecture est un substrat à base de silicium. De manière avantageuse, le photodétecteur est configuré pour détecter un rayonnement compris dans la gamme 1µm - 5µm.

Le dispositif de détection est un dispositif dit « refroidi » c'est-à-dire qu'il est destiné à fonctionner à une température inférieure à la température ambiante afin de délivrer des caractéristiques techniques améliorées en comparaison d'un dispositif fonctionnant à la température ambiante. De manière avantageuse, le dispositif de détection est destiné à travailler dans la gamme 77K - 200K, de manière encore plus avantageuse entre 120K et 200K. a titre d'exemple, une photodiode de type zone P dans un substrat N à base de HgCdTe peut travailler à environ 120K. il est également possible d'utiliser un photodétecteur de type « XBn » réalisé avec des alliages de GaSb/AlSbAs/lnAsSb.

Pour obtenir un dispositif refroidi, le circuit de détection 1 est relié thermiquement à une source froide 4 qui va capter les calories émises et refroidir le circuit de détection 1.

Selon l'invention, la source froide 4 est reliée au circuit de détection 1 et au circuit de lecture 2 afin de forcer le fonctionnement à basse température de l'ensemble. La source froide 4 est connectée au circuit de détection 1 par l'intermédiaire d'une table froide 3. Le circuit de détection 1 et le circuit de lecture 2 sont fixés mécaniquement à la table froide 3. Préférentiellement, le circuit de détection 1 est fixé à la table froide 3 par l'intermédiaire du circuit de lecture 2.

Dans le mode de réalisation particulier illustré à la figure 1, la source froide 4 est connectée thermiquement au circuit de détection 1 par l'intermédiaire du circuit de lecture 2 et par l'intermédiaire de la table froide 3.

La source froide 4 est un refroidisseur de Joule-Thomson et plus particulièrement un refroidisseur de Joule-Thomson en boucle fermée.

Le refroidisseur de Joule-Thomson utilise la détente de Joule-Thomson et il effectue une détente laminaire et stationnaire d'un gaz pur ou d'un mélange gazeux présent dans le refroidisseur. Cette détente est réalisée en faisant passer le flux de gaz au travers d'un orifice de détente 5. La détente est réalisée dans un environnement calorifugé de manière à obtenir une détente isenthalpique. Lors du passage à travers de l'orifice de détente 5 également appelé gicleur, il y a changement de pression.

Lors de la détente de Joule-Thomson, l'expansion du gaz s'accompagne d'une variation de la température du gaz et plus particulièrement d'une diminution de la température de ce dernier allant jusqu'à sa liquéfaction.

En comparaison d'un dispositif selon l'art antérieur qui utilise une machine de type Stirling pour réaliser le refroidissement du dispositif de détection, l'utilisation d'un refroidisseur de Joule-Thomson en boucle fermée permet de réduire la consommation énergétique du module de refroidissement.

A titre d'exemple, un refroidisseur de Joule-Thomson utilisant de l'azote pur est en mesure de travailler à la température de liquéfaction de l'azote, c'est-à-dire 77K. Si le gaz utilisé est de l'argon, la température de travail du refroidisseur est égale à 82K. La température de travail correspond à la température minimale à l'équilibre entre les phases solides et liquides.

En remplaçant un gaz pur par un mélange de gaz, il est possible de diminuer le gradient de pression généré par le compresseur entre le circuit basse pression et le circuit haute pression. De manière avantageuse, le mélange est également choisi pour faire fonctionner le refroidisseur de Joule-Thomson à une température de travail qui est en adéquation avec les besoins du dispositif de détection.

De manière particulièrement avantageuse, le mélange de gaz utilisé permet de faire travailler le refroidisseur avec un faible gradient de pression, typiquement avec un gradient de pression entre les parties amont et aval d'un compresseur inférieur ou égal à 15 bar soit 15.10⁵Pa.

A titre d'exemple, pour faire évoluer la température de travail du refroidisseur dans la gamme 120-200K, le mélange de gaz contient au moins un gaz choisi parmi l'éthane, l'isobutane, le méthane, le krypton, le propane, le pentane, l'éthylène, le butane.

Il est également avantageux d'ajouter un additif de type HFE (hydrofluoroéther) dans le mélange de gaz afin d'augmenter la plage de fonctionnement du refroidisseur. Il est alors possible de faire fonctionner le refroidisseur dans la gamme -40°C +71°C. A titre d'exemple, il est possible d'utiliser le HFE-7100 qui comporte 40% de 1-methoxy-1,1,2,2,3,3,4,4-nonafluorobutane et 60% de 1-méthoxy-2-trifluorométhyl-1,1,2,3,3,3-hexafluoropropane. L'utilisation d'un tel additif permet de faire fonctionner le refroidisseur depuis la température ambiante. L'additif permet un démarrage de l'effet Joule-Thomson à la température ambiante ce qui refroidit le mélange de gaz qui interviennent ensuite dans le refroidissement à de plus basses températures. Dans cette configuration, il n'est pas nécessaire d'utiliser un module de pré-refroidissement.

Si un mélange gazeux est utilisé, il est avantageux d'ajouter un gaz non liquéfiable à la température de fonctionnement du refroidisseur de manière à avoir une phase gazeuse en amont et en aval du compresseur 6 ce qui permet d'améliorer la propulsion des composés liquéfiés du mélange. Par exemple, si le refroidisseur a une température de travail comprise entre 120 et 200K, il est avantageux de rajouter de l'azote et/ou de l'argon.

Le système de refroidissement comporte une partie basse pression et une partie haute pression.

Le mélange détendu est comprimé au moyen d'au moins un compresseur 6 qui réalise la séparation entre la partie basse pression et la partie haute pression. Au niveau du compresseur 6, le mélange est introduit depuis la partie basse pression pour être injecté dans la partie haute pression.

De manière avantageuse, le compresseur 6 est configuré pour assurer un gradient de pression compris entre 2 et 15 bar. Le gradient de pression correspond à la différence de pression qui existe entre la partie haute pression et la partie basse pression.

Différentes technologies peuvent être utilisées pour former le compresseur 6. Par exemple, le compresseur 6 est un compresseur à membrane qui utilise la déformation d'une membrane. Il est également possible d'utiliser un compresseur muni d'un simple piston ou de deux pistons travaillant en opposition de phase. Il est encore possible d'utiliser un compresseur à spiral également appelé compresseur scroll. Il est également possible d'utiliser un compresseur à palettes.

Après sa sortie du compresseur 6, le gaz est envoyé dans l'orifice de détente 5. L'orifice de détente 5 réalise l'autre séparation entre la partie haute pression et la partie basse pression. La détente de Joule-Thomson a lieu au niveau de l'orifice de détente 5. Avantageusement, l'orifice de détente est à section fixe, mais un orifice à section variable est également envisageable. La détente du gaz se fait à l'intérieur d'une cavité située à l'intérieure de la table froide 3. De cette manière, l'expansion du gaz dans la cavité interne 7 entraine une diminution de la température du gaz et une diminution de la température de la table froide 3 de préférence jusqu'à la température de liquéfaction du gaz ou d'un des gaz. Comme le circuit de détection 1 est connecté thermiquement sur la table froide 3, l'expansion du gaz dans la cavité interne 7 entraine un refroidissement du circuit de détection 1.

La table froide peut être un élément monolithique. Cependant, pour favoriser sa conception, il est avantageux de former un support et de lui ajouter un capot qui définira au moins en partie la cavité interne. Le support sépare le circuit de détection et le capot.

Lors de la détente, il est possible qu'au moins une partie du mélange passe de la phase gazeuse à la phase liquide à cause de l'abaissement de température. La cavité interne 7 comporte selon l'invention un évaporateur qui est en contact thermique avec le circuit de détection pour assurer un bon refroidissement. L'évaporateur permet de réaliser un changement de phase depuis la phase liquide vers la phase gazeuse. Pour accentuer l'évaporation, la surface interne de la cavité est texturée, surtout la partie de la cavité qui est la plus proche du circuit de détection de manière à avoir le maximum d'échange thermique à proximité du circuit de détection et donc le maximum de refroidissement.

Le mélange détendu traverse l'évaporateur et il est ensuite envoyé à l'entrée du compresseur 6 pour être réinjecté dans la partie haute pression. Le gaz du refroidisseur circule à l'intérieur d'un circuit fermé ce qui permet un fonctionnement sur de longues périodes de temps tout en occupant un volume restreint.

Cette configuration est particulièrement avantageuse car elle permet de découpler mécaniquement le compresseur et le circuit de détection ce qui réduit fortement les phénomènes de vibration induite.

De manière avantageuse, le refroidisseur comporte encore un échangeur 8 qui connecte thermiquement du gaz circulant dans la partie haute pression avec du gaz circulant dans la partie basse pression. L'échangeur 8 est configuré de manière à ce que le gaz présent dans la partie haute pression soit pré-refroidi par le gaz détendu et plus froid se trouvant dans la partie basse pression. L'échangeur 8 est avantageusement un échangeur à contre-courant ce qui permet d'augmenter l'efficacité de la liquéfaction du mélange au niveau de l'orifice de détente. Dans un échangeur à contre-courant, le flux de gaz chaud va dans le sens contraire du flux de gaz froid.

L'échangeur à contre courant peut être réalisé de différentes manières, par exemple au moyen de tubes métalliques concentriques ou des plaques parallèles augmentant la surface d'échange. Les tubes métalliques peuvent être lisses. En variante, les tubes métalliques sont texturés de manière à augmenter la surface de contact. A titre d'exemple, les tubes métalliques sont recouverts d'ailette ou ils peuvent être, par exemple corrugués. Ce qui est fait pour les tubes concentriques peut également être appliqué aux plaques parallèles.

L'échangeur 8 peut être réalisé dans un métal, mais il est également possible de réaliser l'échangeur 8 dans du silicium ou du verre ce qui facilite la réalisation d'un échangeur de faible dimension car il est possible de le réaliser par micro-usinage avec des technologies utilisées classiquement en microélectronique ou en nanotechnologie.

Dans certains modes de réalisation, plusieurs échangeurs 8 peuvent être montés en parallèle dans le sens d'écoulement du mélange.

Il est également possible de monter plusieurs échangeurs 8 en série. Avantageusement, dans cette configuration, des séparateurs de phase sont montés aux échangeurs ou entre les échangeurs. Les séparateurs de phase sont configurés pour séparer les gaz et les liquides de sorte que les liquides quittent le circuit haute pression pour intégrer le circuit basse pression. Ce mode de réalisation est particulièrement efficace car ce sont majoritairement des gaz qui sont propulsés et non un mélange gaz/liquide.

Dans le mode de réalisation particulier illustré à la figure 1, le refroidisseur Joule-Thomson représenté à la figure 1 est combiné à un Dewar 9 comprenant une enveloppe extérieure. Le circuit de détection est avantageusement placé sous vide dans le Dewar 9. Il est également avantageux de placer sous vide la cavité interne 7, l'échangeur 8 et l'orifice 5.

Dans un mode de réalisation particulier non représenté, la table froide 3 est réalisée par le substrat du circuit de lecture 2 ce qui permet de limiter la masse globale de matière se trouvant à basse température et ainsi réduire l'inertie thermique et mécanique du dispositif de détection.

Afin de définir une zone d'observation et pour protéger le circuit de détection 1 du rayonnement extérieur parasite hors de cette zone d'observation, le dispositif de détection comporte préférentiellement un écran froid 10 (ou coldshield en anglais) et avantageusement une lentille.

L'écran froid 10 est réalisé dans un matériau opaque au rayonnement à détecter par le circuit de détection. L'écran froid 10 est préférentiellement recouvert au moins sur sa face interne par un revêtement réduisant les réflexions parasites du rayonnement incident.

L'écran froid 10 présente une forme adéquate et il entoure le circuit de détection afin de limiter autant que possible, l'introduction d'un rayonnement incident ailleurs que par la zone d'observation.

## Revendications

1. Dispositif de détection de rayonnement infrarouge comportant :
- un circuit de détection (1) configuré pour détecter ledit rayonnement infrarouge et muni d'au moins un photodétecteur,
- un circuit de lecture (2) connecté électriquement au circuit de détection (1) et configuré pour traiter le signal électrique émis par le circuit de détection (1),
- un refroidisseur de Joule-Thomson muni
∘ d'une table froide (3) connectée thermiquement et mécaniquement au circuit de détection (1) et au circuit de lecture (2) pour refroidir le circuit de détection (1) et le circuit de lecture (2), la table froide (3) comportant une cavité interne (7),
∘ d'un orifice de détente (5) disposé à une entrée de la cavité interne (7) pour refroidir la table froide (3),
**caractérisé en ce que** la surface interne de la cavité interne (7) à proximité du circuit de détection (1) est texturée pour former un évaporateur en contact thermique avec le circuit de détection (1), l'évaporateur réalisant un changement de phase du gaz depuis la phase liquide vers la phase gazeuse et **en ce que** le refroidisseur de Joule-Thomson comporte un compresseur (6) ayant une sortie alimentant l'orifice de détente (5) en gaz et une entrée recevant ledit gaz détendu depuis une sortie de la cavité interne (7).

2. Dispositif de détection selon la revendication 1 **caractérisé en ce qu'**il comporte un échangeur (8) configuré pour refroidir le gaz en sortie du compresseur (6) au moyen du gaz détendu en sortie de la cavité interne (7).

3. Dispositif de détection selon la revendication 2 **caractérisé en ce que** l'échangeur (8) est un échangeur à contre-courant.

4. Dispositif de détection selon l'une quelconque des revendications 1 à 3 **caractérisé en ce que** le compresseur (6) est configuré pour générer un gradient de pression compris entre 2 et 15 bar.

5. Dispositif de détection selon l'une quelconque des revendications 1 à 4 **caractérisé en ce qu'**il est dépourvu d'un module de pré-refroidissement

6. Procédé de refroidissement d'un dispositif de détection de rayonnement infrarouge selon la revendication 1 dans lequel le gaz est un mélange comportant au moins un gaz choisi parmi l'éthane, l'isobutane, le méthane, le krypton, le propane, le pentane, l'éthylène, le butane.

7. Procédé de refroidissement selon la revendication 6 dans lequel le mélange gazeux comporte au moins un gaz non liquéfiable à la température de fonctionnement du refroidisseur de manière à avoir une phase gazeuse en amont et en aval du compresseur (6).

8. Procédé de refroidissement selon l'une des revendications 6 et 7 dans lequel le mélange gazeux comporte au moins un additif de type hydrofluoroéther.

## Patentansprüche

1. Detektionsvorrichtung für Infrarotstrahlung, umfassend:
- eine Detektionsschaltung (1), die dazu konfiguriert ist, die Infrarotstrahlung zu detektieren, und mit mindestens einem Fotodetektor versehen ist,
- eine Ausleseschaltung (2), die mit der Detektionsschaltung (1) elektrisch verbunden und dazu konfiguriert ist, das von der Detektionsschaltung (1) ausgegebene elektrische Signal zu verarbeiten,
- einen Joule-Thomson-Kühler, versehen mit
∘ einem Kältetisch (3), der thermisch und mechanisch mit der Detektionsschaltung (1) und der Ausleseschaltung (2) verbunden ist, um die Detektionsschaltung (1) und die Ausleseschaltung (2) zu kühlen, wobei der Kältetisch (3) einen inneren Hohlraum (7) aufweist,
∘ einer Entspannungsöffnung (5), die an einem Eingang des inneren Hohlraums (7) angeordnet ist, um den Kältetisch (3) zu kühlen,
**dadurch gekennzeichnet, dass** die Innenfläche des inneren Hohlraums (7) in der Nähe der Detektionsschaltung (1) texturiert ist, um einen Verdampfer zu bilden, der mit der Detektionsschaltung (1) in thermischem Kontakt ist, wobei der Verdampfer einen Phasenübergang des Gases von der Flüssigphase in die Gasphase bewirkt, und dadurch, dass der Joule-Thomson-Kühler einen Verdichter (6) umfasst, dessen Ausgang die Entspannungsöffnung (5) mit Gas versorgt und dessen Eingang das entspannte Gas von einem Ausgang des inneren Hohlraums (7) empfängt.

2. Detektionsvorrichtung nach Anspruch 1, **dadurch gekennzeichnet, dass** sie einen Wärmetauscher (8) umfasst, der dazu konfiguriert ist, das Gas am Ausgang des Verdichters (6) mit Hilfe des am Ausgang des inneren Hohlraums (7) entspannten Gases zu kühlen.

3. Detektionsvorrichtung nach Anspruch 2, **dadurch gekennzeichnet, dass** der Wärmetauscher (8) ein Gegenstromwärmetauscher ist.

4. Detektionsvorrichtung nach einem der Ansprüche 1 bis 3, **dadurch gekennzeichnet, dass** der Verdichter (6) dazu konfiguriert ist, einen Druckgradienten zwischen 2 und 15 bar zu erzeugen.

5. Detektionsvorrichtung nach einem der Ansprüche 1 bis 4, **dadurch gekennzeichnet, dass** kein Vorkühlmodul vorgesehen ist.

6. Verfahren zum Kühlen einer Detektionsvorrichtung für Infrarotstrahlung nach Anspruch 1, wobei das Gas ein Gemisch ist, die mindestens ein Gas enthält, das aus Ethan, Isobutan, Methan, Krypton, Propan, Pentan, Ethylen und Butan gewählt ist.

7. Kühlverfahren nach Anspruch 6, wobei das Gasgemisch mindestens ein Gas enthält, das bei der Betriebstemperatur des Kühlers nicht verflüssigbar ist, sodass vor und hinter dem Verdichter (6) eine Gasphase vorliegt.

8. Kühlverfahren nach einem der Ansprüche 6 und 7, wobei das Gasgemisch mindestens ein Additiv vom Typ Hydrofluorether enthält.

## Claims

1. Device for detection of infrared radiation comprising:
- a detection circuit (1) configured to detect said infrared radiation and provided with at least one photodetector,
- a readout circuit (2) electrically connected to the detection circuit (1) and configured to process the electrical signal emitted by the detection circuit (1),
- a Joule-Thomson cooler fitted with
∘ a cold table (3) connected thermally and mechanically to the detection circuit (1) and the readout circuit (2) to cool the detection circuit (1) and the readout circuit (2), the cold table (3) comprising an internal cavity (7),
∘ a relief port (5) arranged at an input of the internal cavity (7) to cool the cold table,
**characterised in that** the inner wall of the internal cavity (7) is textured in the vicinity of the detection circuit (1) to form an evaporator in thermal contact with the detection circuit (1), the evaporator achieving a phase change of the gas from a liquid phase to a gaseous phase and **in that** the Joule-Thomson cooler comprises a compressor (6) with an outlet supplying the relief port (5) with gas and an input receiving said relaxed gas from an output of the internal cavity (7).

2. Detection device according to claim 1 **characterised in that** it contains an exchanger (8) configured to cool the gas at the compressor outlet (6) by means of the relaxed gas at the output of the internal cavity (7).

3. Detection device according to claim 2 **characterised in that** the exchanger (8) is a countercurrent exchanger.

4. Detection device according to any one of claims 1 to 3 **characterised in that** the compressor (6) is configured to generate a pressure gradient between 2 and 15 bar.

5. Detection device according to any one of claims 1 to 4 **characterised in that** it is devoid of a pre-cooling module.

6. A cooling process of a detection device of infrared radiation according to claim 1 wherein the gas is a mixture containing at least one gas selected among ethane, isobutane, methane, krypton, propane, pentane, ethylene, butane.

7. The cooling process according to claim 6 wherein the gaseous mixture contains at least one non liquefiable gas at the operating temperature of the cooler in order to have a gaseous phase upstream and downstream of the compressor (6).

8. The cooling process according to one of claims 6 and 7 wherein the gaseous mixture contains at least one additive of hydrofluoroether type.
